# EUROPEAN PATENT SPECIFICATION

(11) **EP 4 407 499 B1**
(45) Date of publication and mention of the grant of the patent: **24.09.2025**
(21) Application number: 24150138.6
(22) Date of filing: 03.01.2024
(51) Int. Cl.: G06F 21/62, H04L 9/40, G06F 21/60

(54) **METHOD AND SYSTEM FOR DYNAMIC ACCESS BASED ON GRANTED PERMISSIONS**
VERFAHREN UND SYSTEM FÜR DYNAMISCHEN ZUGRIFF AUF BASIS VON GENEHMIGTEN BERECHTIGUNGEN
PROCÉDÉ ET SYSTÈME D'ACCÈS DYNAMIQUE BASÉS SUR DES AUTORISATIONS AUTORISÉES

(30) Priority: 24.01.2023 US 202318100921
(43) Date of publication of application: 31.07.2024
(73) Proprietor: BlackBerry Limited, Waterloo, Ontario N2K 0A7 (CA)
(72) Inventor: Frackiewicz, Karol, Waterloo, N2K 0A7 (CA); ROGERS, Darren Edward, Waterloo, N2K 0A7 (CA); MUKHERJEE, Biswaroop, Waterloo, N2K 0A7 (CA); FERGUSON, Geordon Thomas, Waterloo, N2K 0A7 (CA); BLAIS, Pierre Pierre, Waterloo, N2K 0A7 (CA)
(74) Representative: Novagraaf International SA

(56) References cited:
- CN-B- 107 133 513
- US-A1- 2022 294 770
- ZHAUNIAROVICH YURY ET AL: "Small Changes, Big Changes: An Updated View on the Android Permission System", 7 September 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 346 - 367, ISBN: 978-3-540-74549-5, XP047355685
- YANG YAPING ET AL: "Research on non-authorized privilege escalation detection of android applications", 2016 17TH IEEE/ACIS INTERNATIONAL CONFERENCE ON SOFTWARE ENGINEERING, ARTIFICIAL INTELLIGENCE, NETWORKING AND PARALLEL/DISTRIBUTED COMPUTING (SNPD), IEEE, 30 May 2016 (2016-05-30), pages 563 - 568, XP032926941, DOI: 10.1109/SNPD.2016.7515959
- MOIZ ABDUL ET AL: "A Survey of Security Vulnerabilities in Android Automotive Apps", 2022 IEEE/ACM 3RD INTERNATIONAL WORKSHOP ON ENGINEERING AND CYBERSECURITY OF CRITICAL SYSTEMS (ENCYCRIS), ACM, 16 May 2022 (2022-05-16), pages 17 - 24, XP034145801, DOI: 10.1145/3524489.3527300
- ANONYMOUS: "Users for system developers", 26 February 2024 (2024-02-26), pages 1 - 3, XP093144454, Retrieved from the Internet <URL:https://web.archive.org/web/20240226071234/https://android.googlesource.com/platform/frameworks/base/+/master/core/java/android/os/Users.md> [retrieved on 20240322]

## Description

### FIELD OF THE DISCLOSURE

The present disclosure relates to software systems, and in particular relates to permission management in software systems.

### BACKGROUND

Each resource in a typical Operating System (OS) filesystem namespace, life files, directories, or Unix domain sockets, among others, is owned by a valid user and a group. Read, write, and search/execute access to the resource is specified separately for the owner, group, and everyone else.

Each user, application or process on these operating systems is identified by a username and a user identifier (UID), and belongs to a primary group, identified by a group identifier (GID). The user may also belong to one or more supplementary groups, also identified by GIDs.

Each process executed on the system initially assumes the UID of the calling process, for example of the shell. If the running process needs to access a resource on the system, unless all users are given access permissions, the resource must either be owned by the same user as the running process, or the user must be a member of the resource's group.

A complex software system can use many users and provide many resources, with many users and groups. The actual users and groups can be different between different hosts that the software is installed on. This can make the user group membership and access management to resources very complex.

In such software systems, UIDs and GIDs are typically tracked in operating system files that can be located on read-only filesystem in order to protect the system from changes to these and other files. This prevents the dynamic creation of UIDs and GIDs once the system is deployed.

CN 107 133 513 B relates to a third-party inter-application communication access control method supporting the Android runtime permission mechanism.

ZHAUNIAROVICH YURY ET AL: "Small Changes, Big Changes: An Updated View on the Android Permission System", 7 September 2016 (2016-09-07), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 346 - 367, relates to the runtime permission system of Android.

It is therefore the object of the present invention to provide an improved method for managing permissions, a corresponding computing device, and a corresponding computer readable medium.

This object is solved by the subject-matter of the independent claims. Preferred embodiments are defined in the dependent claims.

### BRIEF DESCRIPTION OF THE DRAWINGS

The present disclosure will be better understood with reference to the drawings, in which:
**Figure 1** is a block diagram showing an example system having insight generators and insight consumers;
**Figure 2** is a block diagram showing an example architecture for an edge domain.
**Figure 3** is a block diagram showing an example Permission Service.
**Figure 4** is a block diagram a simplified architecture for performing the embodiments of the present disclosure.
**Figure 5** is a dataflow diagram in showing the granting of permissions to a UID within a Permission Service.
**Figure 6** is a dataflow diagram showing verification of permissions with a Permission Service prior to providing access to resources.
**Figure 7** is a dataflow diagram showing a determination of lack of permissions in a resource access attempt.
**Figure 8** is a dataflow diagram showing installation of a synthetic sensor and that synthetic sensor then defining and granting a permission.
**Figure 9** is a dataflow diagram showing the obtaining of GID permissions and a group identifier from a Permission Service prior to providing access to resources.
**Figure 10** is a dataflow diagram showing the use of group identifier permissions to write using a socket.
**Figure 11** is a block diagram of a simplified computing device capable of being used with the embodiments of the present disclosure.

### DETAILED DESCRIPTION OF THE DRAWINGS

The present disclosure provides a method at a Permission Service on a computing device for managing permissions, the method comprising: receiving a request at the Permission Service from a first application, the request comprising an identifier associated with an operating system for a second application and a permission for the second application to access resources; performing an action at the Permission Service based on the received request; and returning results of the action to the first application indicating whether the second application has the permission to access the resources.

The present disclosure further provides a computing device configured as a Permission Service for managing permissions, the computing device comprising: a processor; and a communications subsystem, wherein the computing device is configured to: receive a request at the Permission Service from a first application, the request comprising an identifier associated with an operating system for a second application and a permission for the second application to access resources; perform an action at the Permission Service based on the received request; and return results of the action to the first application indicating whether the second application has permission to access the resources.

The present disclosure further provides a computer readable medium for storing instruction code, which, when executed by a processor of a computing device configured as a Permission Service for managing permissions cause the computing device to: receive a request at the Permission Service from a first application, the request comprising an identifier associated with an operating system for a second application and a permission for the second application to access resources; perform an action at the Permission Service based on the received request; and return results of the action to the first application indicating whether the second application has the permission to access the resources.

The present disclosure is directed to delegation of the management of resource group membership to a software-specific, OS-agnostic permission manager. In particular, each installed software application in a system may declare a set of custom permissions that are required to access services provided by it. These permissions are then granted to specific users, by UID, and only processes that are executed as the user that is granted these permissions can access the services.

Additionally, the custom permissions can have groups associated with them, which correspond to filesystem namespace resource group owners. When a process is installed, based on the custom permissions it is granted, a list of groups is generated. When the process is started, the user that it is running as is automatically granted membership in all of these groups. Specifically, this works on read-write filesystems or on file systems that are moved to read-only post initial deployment.

This allows a single source of truth for all permissions - the custom software permissions, and the abstracted OS permissions that allow access to resources.

While the present disclosure can be used in any software system, in one embodiment it may be run on a vehicle software system. The vehicle software system is described below. However, the use of a vehicle software system is not limiting, and other software systems could equally be used with the embodiments of the present disclosure.

### Vehicle Software System

Modern vehicles have many sensors. Such sensors may be distributed within the various computing nodes on the vehicle, where each computing node may have access to zero, one or more sensor drivers. Such sensor nodes may further have different manufacturers, and operate using different operating systems. Similarly, other distributed systems could have a plurality of nodes where the nodes need to communicate with each other.

Sensors, or groups of sensors, may be used to generate information that could be useful to one or more applications. In a modern vehicle, information from one or more physical sensors may be processed to create an "Insight" that may be valuable in a system. Such one or more physical sensors and the processing associated therewith may be referred to logically as a micro-service or a Synthetic Sensor (SS). The terms micro-service and synthetic sensor are used interchangeably herein.

Specifically, a Synthetic Sensor is a special application that is deployed dynamically in a system running on a vehicle. Its role is to watch for specific signals emitted from hardware sensors in a vehicle and dynamically synthesize insights based on these signals. An example of such a Synthetic Sensor is the detection of a child left behind in a vehicle cabin that is becoming hot. Such a Synthetic Sensor would watch vehicle signals such as ignition state, cabin temperature, child seat lock state, among others.

Synthetic Sensors may exist in other types of applications, including but not limited to medical applications, manufacturing applications, Internet of Things applications, among others, and the present disclosure is not limited to vehicle applications. Vehicle applications are provided for illustration below.

Insight is the term used herein to describe any computer-created interpretation of basic sensor data. Insights can be as straight forward as data aggregation or correlation or as complex as artificial intelligence and machine learning. For example, a temperature sensor providing high and low watermarks for notification may be considered an "insight". For location services, geofencing is an insight. For cameras, occupant recognition may be an insight. The use of a combination of sensors such as temperature sensors and cameras, may be used with an artificial intelligence model to determine whether a car seat is occupied in a hot vehicle, which may be an insight. Many other examples of insights are possible.

In one embodiment, the vehicle applications may be implemented in a system providing consistent access to vehicle data and intelligent insights in a way that is familiar and accessible to developer communities. Such environment may allow cloud developers to extend their reach to the edge within the vehicle through the development of Synthetic Sensors which derive intelligent insights on vehicle data using common cloud development technologies and paradigms. Such environment may provide consistent access to vehicle data such that Synthetic Sensors can be written and deployed to a broad vehicle base without bespoke customization.

Insights may be generated based on a processor running on a first installation or domain, but they often need to be shared with authorized software modules running in external domains. Each may be run using different operating systems.

An application (e.g., a Synthetic Sensor) that derives insights based on signals from vehicle sensors may wish to dynamically control access to all its insights or control access to each insight independently of others. Such an application would not be able to create or request the creation of new UIDs or GIDs when running in a system where the main OS file system is installed in a read-only partition.

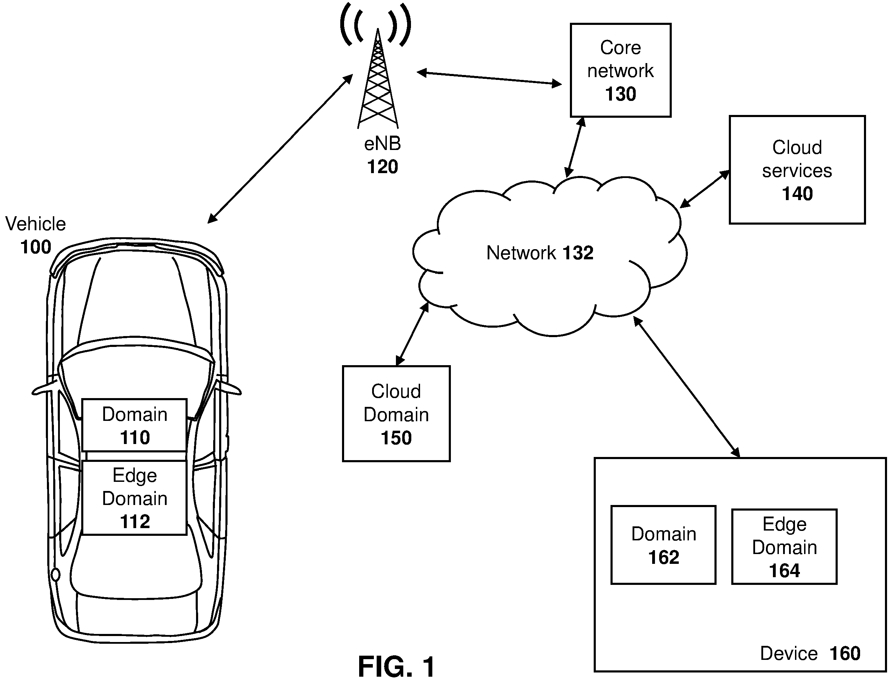

Reference is now made to **Figure 1****,** which shows an example system showing various generators and consumers of insights. The embodiment of **Figure 1** is merely provided for illustration purposes, and in some cases fewer participants in a system will exist. In other cases, more participants in a system will exist.

In the embodiment of **Figure 1****,** a vehicle **100** may be equipped with a computing system and a communications system. Part of the computing system may include a domain **110,** which, as described below, may have applications that consume insights. Further, part of the computing system on vehicle **110** may include an edge domain **112.** In some embodiments, edge domain **112** may generate insights. However, in other cases, insights may be generated within domain **110** or consumed within edge domain **112.**

In the example of **Figure 1****,** vehicle **100** communicates utilizing a communications system with an access point, such as a cellular base station, shown in **Figure 1** as eNB **120.** The base station may communicate with a core network **130** which may then forward communications through a network **132** to a cloud services provider **140.** Network **132** may, for example, be a wide area network such as the Internet.

In other embodiments, rather than a core network **130,** any technology associated with a particular cellular or wireless communications protocol may be used.

In some embodiments, cloud services **140** may provide security for insights that are generated within a domain.

In some embodiments, a cloud domain **150** may generate or consume insights. Cloud domain **150** may communicate through network **132** with a cloud services provider **140** and may communicate with other domains such as domain **112** on vehicle **100** in some cases.

Further, rather than a vehicle, a device **160** may consume insights. Device **160** may be any computing device capable of generating or consuming such insights, and could include Internet of Things devices, mobile devices, medical equipment, vehicles or equipment associated with vehicles, among other options. Device **160** may communicate through network **132** utilizing various wired or wireless technologies, including but not limited to Ethernet, fiber, cellular, Wi-Fi, satellite, among other options.

Device **160** may include a domain **162** which may, in some embodiments, consume insights. Further, device **160** may include an edge domain **164** which may, in some cases, generate insights. However, in other cases, domain **162** may generate insights and edge domain **164** may consume insights.

Further, while the embodiment of **Figure 1** shows only two domains within vehicle **100** or device **160,** in practice only one or many domains may exist within the vehicle **100** or the device **160,** and the present disclosure is not limited to only having two domains within any particular device. In particular, a device **160** may be solely used for generating insights, in which case it will have only a single domain. In other cases, device **160** may solely consume insights and again have only one domain. In other cases, a device **160** or vehicle **100** may have a plurality of domains along with edge domain **112.**

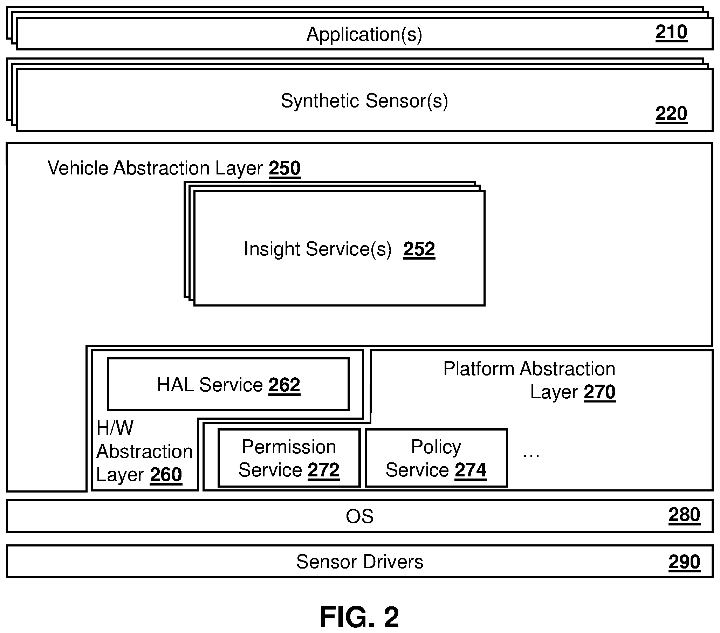

Each domain or edge domain may have an architecture that is OS-agnostic. Specifically, the domains shown in **Figure 1** may be implemented on a variety of domains, where different domains may have different operating systems. For example, in vehicle systems, different vehicle manufacturers may use different operating systems. Therefore, a system architecture for an edge domain may use abstraction layers to allow the system to be implemented on different platforms. Reference is now made to **Figure 2****.**

In the embodiment of **Figure 2****,** applications **210** may be part of an applications layer. An application may in some cases be user facing and utilize synthetic sensors **220** to obtain insights.

Synthetic sensors **220** are part of a synthetic sensor framework. In particular, developers may use the synthetic sensor framework to build synthetic sensors. The framework exposes mechanism to define actions for lifecycle events, services for request/response application program interface (API), among other actions.

The framework of **Figure 2** may further define mechanisms for authentication and authorization of requests and events based on policies. When the synthetic sensor is installed/uninstalled/updated, an Install & Update Service may interact with a Permission Service to update the authentication and authorization policies.

Synthetic sensors **220** may communicate, for example, through an interface with a vehicle abstraction layer (VAL) **250.** Vehicle abstraction layer **250** provides insightful, value-added interfaces for access to vehicle data. It accesses sensor drivers and hardware via a hardware abstraction layer **260.**

The vehicle abstraction layer **250** further provides access insights based on vehicle data. Insights are inferences based on the vehicle data and may be as simple as aggregation or as complex as a machine learning model. For example, a Location Insight Service may provide coordinate location data as well as higher level insights such as geofencing.

Insights may therefore be provided as part of insight services **252** in the embodiment of **Figure 2****.** Such insight services **252** control access to a normalized form of vehicle data and provide value added inferences. Examples can include a location service which provides coordinate location data in a consistent format as well as insights such as geo-fencing. Examples can further include a seat service which provides a myriad of seat information such as belt status, weight, position, and child lock status. A further example may include a camera service which provides video stream for in-cabin camera and possibly functions such as conversations and/or clipping. A battery service may provide insights and access to batteries such as charge state, consumption, projected hours remaining, projected range, among other data. A door service may provide an abstraction for vehicle doors and the door status.

Insight Services generally do not interact directly with sensor hardware to access sensor data, instead they leverage the hardware abstraction layer **260.** This separation provides a clear distinction between the responsibilities of the hardware abstraction layer **260** (sensor integration and normalizing sensor data) and the vehicle abstraction layer **250** (managing access to vehicle data and providing value-add insights).

Insight services **252** may leverage sensor data from multiple hardware abstraction layers in order to provide vehicle abstraction and value-add insights. Synthetic sensors **220** may generate further insights based on the insights/inferences provided by the insight services **252.** In some cases, a synthetic sensor may generate further insights based on the insights provided by another synthetic sensor.

The hardware abstraction layer (HAL) **260** is focused on the integration of sensors, the normalization of sensor data, and is a barrier between safety certified and non-certified software. This may be done through HAL services, where each HAL service **262** may provide three key functions, namely integration to the underlying sensor; normalization of the sensor data; and, if required, providing a barrier between the safety certified and non-certified software

Further, returning to insight service **252,** one of the key functions of the insight service is to enforce access control to normalized sensor data and insights. In order to validate the authentication and authorization of service clients the vehicle abstraction layer services leverage the policy service **274** and Permission Service **272** from the platform abstraction layer **270.**

While the hardware abstraction layer discussed above describes hardware integration, the platform abstraction layer (PAL) **270** encapsulates key aspects of the underlying operating system **280** and platform that allow the system to be ported to different platforms by: defining consistent interfaces to key platform functionality; encapsulating underlying OS specifics into an OS binding component; and supporting high-level/course-grained abstractions beyond the rudimentary OS capabilities.

PAL interfaces are exposed both internally to the HAL and VAL and externally to clients such that the power and portability of these components is extended to clients.

The PAL **270** may have various services. A Permission Service **272** and a policy service **274** are shown in the embodiment of **Figure 2****.** In some cases, other services such as a lifecycle service, a process service and an install and update service may further be provided.

In particular, policy service **274** is responsible for persisting policy values; performing policy queries; notifying policy changes; resolving policy priority; and controlling policy modification. Policies here deal with configuring the behavior of various components, and each policy may have a unique name, a string encoded configuration value, and a priority.

Permission service **272** is the central authority for the domain permissions. Service capabilities that are protected by a permission leverage the Permission Service in order to determine whether the appropriate permissions have been granted or not. In one embodiment, the permission system authentication is underpinned by the Portable Operating System Interface (POSIX) process user and group assignments (UID/GID). The Permission Service identifies/authenticates components based on the UID assigned to their process in the underlying operating system. This UID is carried by the underlying operating system and is deemed legitimate (accessed and managed by the underlying OS using proven/trusted schemes).

While the permission system manages the state of permission grants it does not enforce permissions. Each capability that is protected by permission or the service that owns that capability is responsible for interpreting how that permission should be enforced. For example, a service may leverage a permission upon accepting client connections in order to determine if the client should be allowed to connect. Alternatively, a service may apply permissions in a more fine-grained manner by guarding individual functions. As such, enforcing permissions is beyond the scope of the permission subsystem **272.**

As described below, in order to help enforce permissions the Permission Service may support a specialized type of permission that is granted on the basis of membership in an operating system user group. As such, enforcement of the permission may be checked by validating the association of the process with an appropriate group id (GID). This specialized "group permission" type allows permissions to be enforced via trusted operating systems mechanisms.

Permissions may be predefined in the permission subsystem configuration. In some embodiments, at runtime, permissions can be granted, revoked and queried, but not created. Permissions describe an authorization grant of a resource to a particular group or user. Permissions may be defined by a unique permission name that is interpreted by its clients. As such, permission grants may be composed of a permission Name, which comprises a unique name for the permission. Permission grants may further be composed of UIDs, specifically a list of UIDs to which the named permission has been granted. Permission grants may further be composed of GIDs, where GIDs are only associated with the specialized "group permission" type. The GIDs represent the groups whose membership includes access to resources protected by the permission.

In one embodiment, permissions are denied by default. As such, if an entity does not carry any UID associated with a named permission then the permission is denied. In the case of a group permission, if the entity is not a member of a permission group then the permission is denied.

Unlike configuration policies, permissions cannot be assigned multiple different values and do not carry a priority. Permissions carry a single value across the system. Permissions are expected to be queried much more frequently than they will be granted or revoked. Permissions are defined in groups that describe a collection of permissions that can be granted/revoked by the same set of entities.

As described below, in order to enable application environments built as clients to the system of **Figure 2** to manage the granting of permissions to their components, the system supports two statically assigned permissions. First the "grant permission" may be assigned to components that are allowed to grant and revoke permissions. Second, the more powerful "delegation permission" may be assigned to components that are allowed to delegate the granting of permissions. Each permission group defined in the permission configuration also has defined grant and delegation permissions defined.

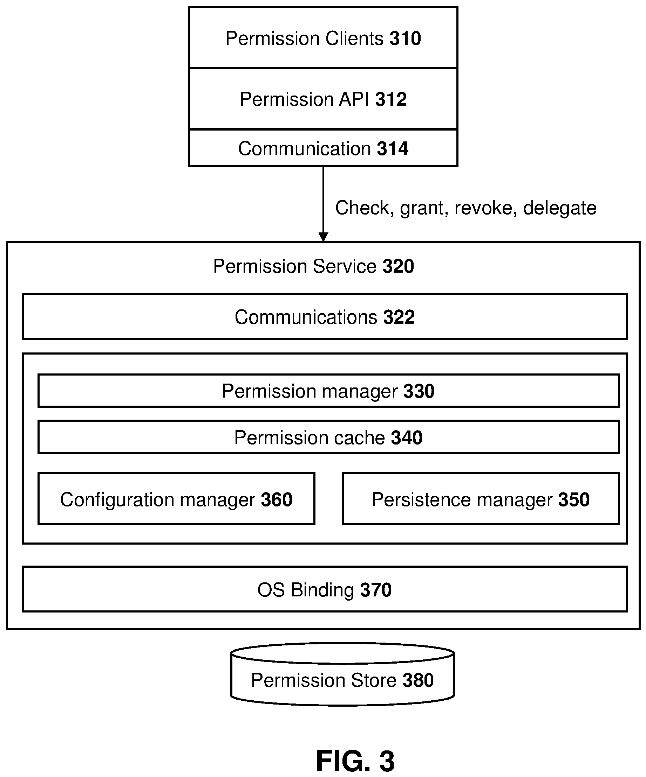

One example of a permission system is provided with regard to **Figure 3****.** In particular, a permission client **310** may use a permission API **312** for communication **314** to check permissions.

A Permission Service **320** receives communications **322** and provides these to a permission manager **330.** The permission manager **330** orchestrates permission queries, grants and revocation by delegating to the other permission subsystem components. For example, on query the permission Manager **330** checks the permission cache **340** for the specified permission and determines if the specified permission has been granted to the specified UID.

The permission cache **340** provides optimized access to permissions values. The permission cache **340** may be a write-through cache that manages the transition of permission data to and from persistent storage as needed. The permission cache **340** may leverage the persistence manager **350** in order to perform the storage and retrieval of permission data.

The persistence manager **350** may abstract the persistence scheme and medium. This allows the mechanisms to change without impacting the cache or manager components. For example, the persistence may be in a formatted file or a relational database store in some embodiments.

Permissions may need to be predefined in the permissions configuration file. A configuration manager **360** is responsible for reading, parsing and applying the configuration and orchestrating any configuration changes.

An OS binding **370** may allow binding to a particular operating system, and further allow access to a permission store **380.**

Thus, with the embodiments of **Figures 2** and **3****,** a system which is agnostic to the operating system **280** and to specific sensor drivers **290** is provided.

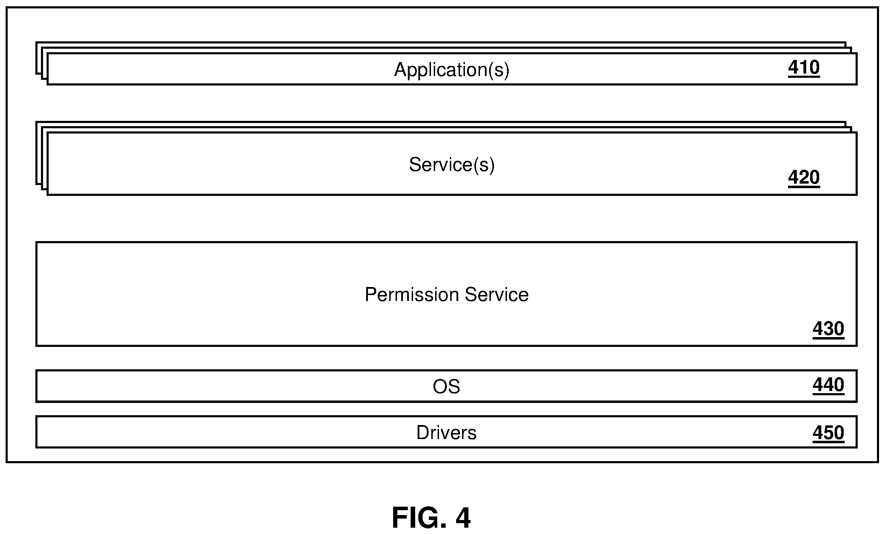

The embodiments of **Figures 2** and **3** can be generalized with regard to the embodiment of **Figure 4****,** where various applications **410** may need access to resources provided by services **420.** In this regard, a Permission Service **430** may be used to determine whether permission to access the resources should be provided.

Such system is independent of the operating system **440** and drivers **450** associated with the operating system **440.**

### Permission Service

Utilizing a system such as those described above with regards to **Figures 2** to **4****,** management of resource group membership can be delegated to a software specific, OS-agnostic permission manager.

Specifically, on Operating Systems (OSs) supporting multiple users (such as Linux^{™}, Windows^{™}, macOS^{™}, among others), a system is required to protect users from each other. In such OSs, access to resources is typically controlled based on user IDs (UIDs) and group IDs (GIDs).

Each user is assigned a unique UID as well as a primary GID. Users can also be granted supplementary groups, inherently giving restricted permissions to access resources owned by other users.

Typically in these OSs, permissions are tied to file system access, basically granting or restricting permissions to read, write, or execute files. Creation of custom groups can only be done by privileged users (root, typically) and, therefore, applications may not create their own custom permissions.

Although very useful and easy to deploy, there are limitations to this approach as it applies mainly to file system resources. In some cases, there is a need to control access to other types of resources and to allow developers of such resources to be able to define their own access control, which may be more than simply read, write, and execute.

An example of this is an application that defines an API to access insights based on signals from vehicle sensors. The application may wish to control general access to all insights or control access to each insight, independently of others.

Thus, the embodiments of the present disclosure define a mechanism by which any application can create and assign its own custom set of permissions, independent of the OS the application is running on.

The Permission Service may use various syntax and grammar for the permission checks. One non-limiting example is provided below with regard to Tables 1 to 3. However, other grammar is possible.

### Permission Domains

A Permission Domain allows for the grouping of permissions together for the purpose of control and administration by the system. Permissions in a domain may only be granted, revoked, added, or removed by clients with the explicit permissions to do so.

Each Permission Domain may have a structured name. For example, permission domain names may be up to 512 lower case characters long, with the grammar provided in Table 1 below.

**TABLE 1: Example Permission Domain Grammar**

| |
|---|
| ```
 <permission-domain>::= <domain> \| <domain>.<domain>
 <domain>::= <lowercase> \| <lowercase><domain>
 <lowercase>::= [a-z]
``` |

As seen in Table 1, a permission domain can consist of a domain or a domain with a dotted notation. Each domain consists of lowercase letters or lowercase letters appended to another domain.

In one embodiment, Permission Domains are declared statically through configuration. Permission Domains are not nested nor hierarchical in some cases.

### Permission Names

Each custom permission is given a name. Thus, permission names are the expression of each custom permission, as a string of characters. A non-limiting example of grammar for permission names is provided in Table 2 below.

**TABLE 2: Example Permission Name Grammar**

| |
|---|
| ```
 <permission-name>::= <element>.<verb>_<subject>
 <element>::= <lc-word> \| <lc-word>.<element>
 <lc-word>::= <lowercase> \| <lowercase><lc-word>
 <lowercase>::= [a-z]
 <verb>::= <word> // should denote an action
 <subject>::= <word> \| <word>_<word> \| <adjective>_<subject>
 <adjective>::= <word> // should denote an adjective
 <word>::= <uppercase> \| <uppercase><word>
 <uppercase>::= [A-Z]
``` |

As seen in Table 2, a permission may denote an action using a <verb> within the name. Further, the subject of the action may also be part of the permission name, and may include an adjective for the subject. In the embodiment of Table 2, such verb and subject may be capitalized.

For example, a permission name may be reserved for a "vehicle" domain and allow access to a signal service at the vehicle. In this case, the permission name may be "vehicle.ACCESS_SIGNAL_SERVICE". In this case, "vehicle" is a prefix that is reserved for the "vehicle" domain, the permission includes the verb "ACCESS", and further includes the subject "SIGNAL SERVICE", thus providing a clear indication of what the permission is being used for. More generally, any prefix could be used. For example, "ignition.START_ENGINE" could use the "ignition" reserved prefix rather than the "vehicle" reserved prefix, where "ignition" is another reserved prefix defined for the "vehicle" domain. In other words, permission names may carry a descriptive name that makes it clear what resources the permission is protecting and what action it protects.

In some embodiments, permission names may be unique across permission domains. In this manner, permission checks do not require a domain check prior to permission check.

As will be appreciated by those in the art, the syntax and grammar of the permission names is merely provided as an example, and is non-limiting. Other grammar forms for permission names are possible.

### Permission Prefixes

In some embodiments, a set of prefixes can be reserved for services within a domain. Services in other domains with the permission to create new permissions are not allowed to create permissions that have a prefix matching a prefix that was reserved by another domain. The domain reserving the prefixes is not limited to creating permissions that use the reserved prefixes.

For example, reserving the prefix "ignition" in the "vehicle" domain would mean that permissions whose name starts with "ignition" may only be declared in the "vehicle" domain. However, permissions in a domain do not need to carry a reserved prefix.

### Static and Dynamic Permission Configuration

Using the grammar of Table 1 and Table 2 above, permission domains and permission names can be pre-defined, such that they can be reserved for system applications, as opposed to client applications. This is achieved by reserving permission name prefixes to prevent namespace squatting and therefore guaranteeing that certain permission name prefixes are reserved for certain permission domains.

For each permission domain, the domain name can be implicitly or explicitly defined as a reserved permission name prefix. For example, creating the permission domain "vehicle" implicitly reserves the "vehicle" permission name prefix for the domain, ensuring that permissions that start with "vehicle" may only be declared or added to the "vehicle" domain. The domain name can also be explicitly defined as a reserved permission name prefix as shown in Table 3 below. More generally any prefix could be used. For example, "ignition.START_ENGINE" could use the prefix "ignition" rather than the domain name prefix.

There are two types of permission configuration. The first is the definition of permissions and the second encompasses the granting of permissions. Permission configuration is static and cannot be modified at runtime. The system may need to be restarted if the static permission configuration needs to be changed.

As will be appreciated by those skilled in the art, this does not mean that permissions cannot be revoked or granted at runtime. It means that permission domains, permission prefixes, and permissions cannot be redefined at runtime. In addition, it implies that any grants made via configuration cannot be revoked at runtime.

In this regard, permission configuration may consist of both the definitions of permission domains and permission grants. The definition of permission domains may include a unique name for the domain, a description of what the domain represents, a list of reserved permission prefixes, and a list of permissions.

For example, a permission configuration example is shown with regard to Table 3.

**TABLE 3: Example Permission configuration**

| |
|---|
| ```
    { "domains": [
      { "name": "vehicle",
       "description": "Domain for vehicle components",
       "reserved-permission-prefixes": [
        "vehicle", "ignition", "lights"
       ],
``` |
| ```
       "permissions" : [
        {"name": "vehicle.ACCESS_SIGNAL_SERVICE"},
        {"name": "vehicle.ACCESS_CABIN_SIGNALS"},
        ("name": "ignition.START_VEHICLE"}
       ]
      },
      { "name": "synthetic.sensors",
       "description": "Domain for synthetic sensors",
       "reserved-permission-prefixes": [
              "synsen"
       ],
       "permissions" : [
        {"name": "synsen.ACCESS_INSIGHTS"}
       ]
      }
     ],
     "permission-grants": [
      {"name": "vehicle. GRANT_PERMISSIONS",
       "uids": [0, 1000]
      },
      {"name": "vehicle.ACCESS_SIGNAL_SERVICE",
       "uids": [1000]
      },
      {"name": "vehicle.ACCESS_CABIN_SIGNALS",
       "uids": [1000]
      }
      {"name": "synthetic.sensors.GRANT_PERMISSIONS",
       "uids": [2000]
      }
``` |
| ```
   ]
    }
``` |

In the example of Table 3, the "vehicle" domain is defined. Under this domain, the "vehicle", "ignition" and "lights" prefixes are reserved. Further, the "synthetic.sensors" domain is defined, reserving the "synsen" prefix.

Four permission grants are statically defined. Specifically, the "vehicle.ACCESS_SIGNAL_SERVICE" permission allows UID 1000 to access the signal service. The "vehicle.ACCESS_CABIN_SIGNALS" permission allows UID 1000 to access the cabin signals.

The "vehicle. GRANT_PERMISSIONS" permission is granted to UIDs 0 and 1000, which means that processes with these UIDs can dynamically grant permissions with a "vehicle", "ignition", or "lights" prefix to any UID.

The "synthetic.sensors.GRANT_PERMISSIONS" permission is granted to UID 2000, which means that processes with this UID can dynamically grant permissions with a "synsen" prefix to any UID.

Thus, the "vehicle.GRANT_PERMISSIONS" is implicitly defined, while two additional permissions are explicitly defined: "vehicle.ACCESS_SIGNAL_SERVICE" and "vehicle.ACCESS_CABIN_SIGNALS". Clients of the signal service can be granted the "vehicle.ACCESS_SIGNAL_SERVICE" through the "permission-grants" configuration (e.g., through "vehicle. GRANT_PERMISSIONS"), in this case the user with UID 1000 is granted this permission.

Therefore, the configuration of Table 3 is a static configuration that may, for example, be loaded from a file, table or database at runtime. However, not all permissions need to be, or can be, pre-defined. Some permissions can only be dynamically created at runtime, depending on what applications are deployed on the system. To support this, a special permission called "GRANT_PERMISSIONS" (such as "vehicle.GRANT_PERMISSIONS" or "synthetic.sensors.GRANT_PERMISSIONS) is implicitly defined for each domain. This permission can be granted to clients at runtime, such that the clients can then dynamically create and grant their own permissions within the domain.

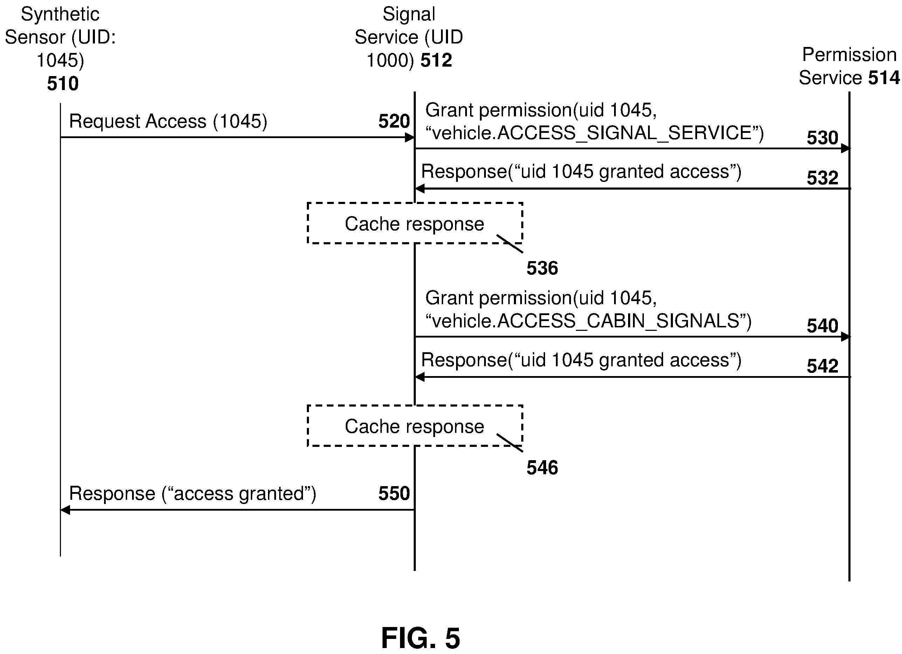

For example, reference is now made to **Figure 5****.** In the embodiment of **Figure 5****,** a synthetic sensor **510** may be a new synthetic sensor that is being introduced to a system. As such, the synthetic sensor **510** may communicate with a signal service **512,** for example for installation, integration, among other factors. Further, a Permission Service **514** may be configured to manage the permissions within the system. Permission Service **514** may, for example, be the Permission Service **272** from the embodiment of **Figure 2** or Permission Service **320** from the embodiment of **Figure 3** or Permission Service **430** from the embodiment of **Figure 4****.**

As provided regarding **Figures 2****,** **3** and **4****,** the Permission Service **514** is an OS-agnostic application that manages permissions for the system. Upon initialization, the Permission Service **514** gathers the static permissions from its configuration (e.g., Table 3). It then sets up the implicit prefixes for each domain.

The Permission Service **514** informs registered clients of permission changes, which is important to support dynamic permission addition and revocation. Therefore, clients of the Permission Service **514** can use its Application Programming Interface (API) to subscribe to permission change update notifications.

Through its API, the Permission Service **514** can be instructed to grant permissions to UIDs. The caller into this API must have the "GRANT_PERMISSIONS" permission for the permission's domain, as described below.

In the same manner, the Permission Service **514** can be instructed to revoke a permission from a UID. The caller into this API must have the "GRANT_PERMISSIONS" permission for the permission's domain.

Another part of the API may allow clients to add permissions within a domain. The caller into this API must have the "GRANT_PERMISSIONS" permission for the permission's domain.

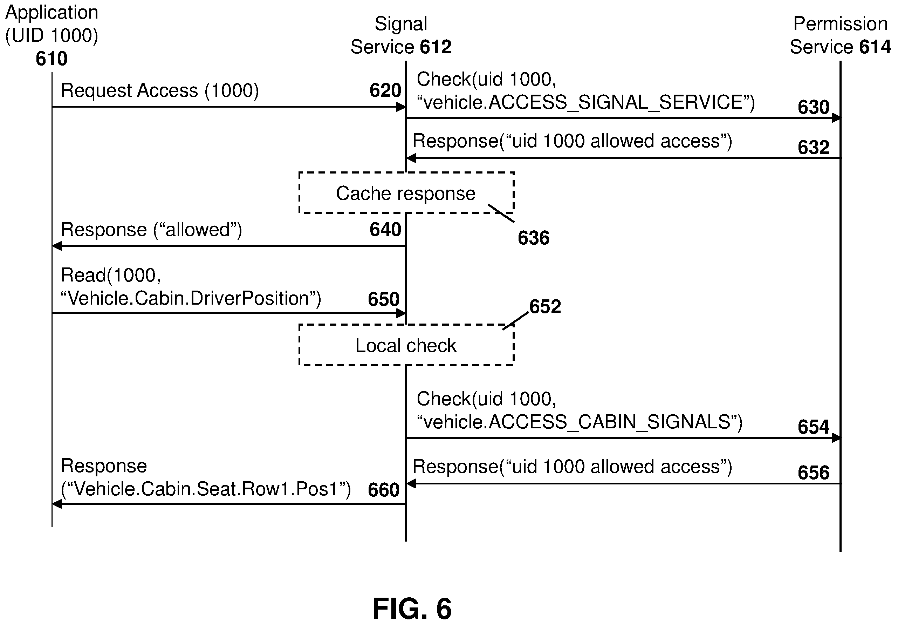

As well, the Permission Service **514** provides an API that can be called to check if a UID has been granted a permission. The caller does not need any special permission to invoke this API. This is shown regarding **Figure 6** below.

Further, a client can use the Permission Service API to obtain the list of permissions granted to a UID. The client does not need any special permission to invoke this API.

Thus, in the embodiment of **Figure 5****,** synthetic sensor **510** has the UID of 1045. Further, signal service **512** has a UID of 1000. In this regard, from the example of Table 3 above, signal service **512** has been given rights to grant permissions (i.e., permission "vehicle. GRANT_PERMISSIONS" is granted to signal service **512** of UID 1000).

When synthetic sensor **510** is installed (or at any subsequent time), it may request access and provide its UID, shown as message **520.** Message **520** may be an explicit or an implicit message. Specifically, the mere installation of the synthetic sensor **510** can give rise to the signal service **512** attempting to grant permissions. In other cases, synthetic sensor **510** can explicitly request access to various services, depending on the synthetic sensor.

In one embodiment, the request at message **520** may request access to specific resources. For example, synthetic sensor **510** may use data from specific sensors that come from various services, such as a signal service or a cabin service, and therefore, the request at message **520** may request access to these services.

On receipt of message **520,** signal service **512** may send a permission grant request to the Permission Service **514,** shown with message **530.** Message **530** could include, for example, the UID of the synthetic sensor **510,** as well as the particular permission that grant is being sought for. Further, message **530** would typically include the UID of signal service **512.** The UIDs of the synthetic sensor **510** and the signal service **512** may be assigned by the operation system.

Permission Service **514** may check that signal service **512** has the right to grant permissions, and if it does, then the permission may be granted and recorded at the Permissions Service **514.** In some cases, Permission Service **514** may check whether the signal service **512** has the right to grant permissions based on the UID of the signal service **512.** Further, Permission Service **514** may send a response **532** in which an indication is provided that UID 1045 has now been granted access to the permission "vehicle.ACCESS_SIGNAL_SERVICE".

Further, in some cases, messages to subscribers of the Permission Service **514** may be sent a message indicating the granting of the permission.

In some embodiments, signal service **512** may cache the response, shown at block **536.**

In some cases, a further message for further permissions may be received from synthetic sensor **510.** In other cases, message **520** could include a request for multiple permissions. In the example of **Figure 5****,** the message **520** may have requested access to both the signal service and the cabin signals. In this regard, signal service **512** may send a grant permission message **540** to the Permission Service **514.** Message **540** may include the UID of synthetic sensor **510,** as well as the permission for which the permission grant is sought.

Again, Permission Service **514** checks that the signal service **512** has the ability to grant permissions and, if yes, then the Permission Service **514** may note that the UID 1045 has the permission to access the cabin signals. Permission Service **514** may then send a response **542** back to the signal service **512** indicating that access has been granted (i.e., the permission "vehicle.ACCESS_CABIN_SIGNALS" is granted to the synthetic sensor **510**).

Further, in some cases, messages to subscribers of the Permission Service **514** may be sent a message indicating the granting of the permission.

The signal service **512** may, in some cases, cache the response for faster processing in the future, as shown with block **546.**

In the example of **Figure 5****,** a response to message **520** may be sent as response **550** in which the signal service **512** informs the synthetic sensor **510** that access has been granted to the permissions sought.

As will be appreciated by those in the art, if signal service **512** does not have the ability to grant permissions, then Permissions Service **514** would reject messages **530** and **540** and, in this case, no permissions would be granted for synthetic sensor **510.**

### Allowed and Disallowed Access Examples

In a further embodiment, an application may request access to a particular service. Reference is now made to **Figure 6****.**

In the embodiment of **Figure 6****,** an application **610** seeks access to a signal service **612** to determine the driver position in the vehicle. For example, application **610** may be trying to determine if the driver's window is up or down, and may therefore need to know if the vehicle is a left hand or right hand drive vehicle.

The signal service **612** may communicate with a Permission Service **614.** The Permission Service **614** may be the Permission Service **272** from the embodiment of **Figure 2****,** the Permission Service **320** from **Figure 3****,** or the Permission Service **430** from the embodiment of **Figure 4****,** for example.

Application **610** sends a request access message **620** to the signal service **612.** The request access message may include the UID 1000 of the application **610** in some embodiments. However, in other embodiments the UID is managed by the OS and is part of message **620.** In this case, the UID can be read by signal service **612,** thereby providing OS level security regarding the identity of the party sending message **620.**

Signal service **612** may then send a check message **630** to Permission Service **614.** Check message may include the UID 1000 of the application **610,** along with the permission that the application is seeking. In this case, the permission is "vehicle. ACCESS_SIGNAL_SERVICE". The message **630** may also include the UID of signal service **612.**

Permission Service **614** can check its records, such as the permission cache **340** or permission store **380** from the embodiment of **Figure 3****,** and determine that the UID 1000 is allowed access. This may be configured, for example, statically at the time that the service starts, or a dynamically after the service starts, for example by utilizing the configuration at Table 3 (UID 1000 is given permission "vehicle.ACCESS_SIGNAL_SERVICE" configured by Table 3) or the permission grant of **Figure 5****.**

Permission Service **614** therefore sends a response message **632** back to the signal service **612,** indicating that the UID is allowed access. As indicated above, Permission Service **614** does not enforce the permissions. Rather, this is the responsibility of signal services **612.** Therefore, signal service **612** has the responsibility to check whether those seeking access to resources managed by the signal service **612** have the correct permissions by querying Permission Service **614.**

On receiving message **632,** signal service **612** may cache the response, shown at block **636** in some cases. This may allow the faster permission determination for access requests in the future. However, the caching at block **636** is optional. In another cases, messages **630** and **632** may be repeated in the future.

In response to message **632,** the signal service **612** may send a response message **640** back to application **610,** indicating that access is allowed.

Application **610** may then seek to find the driver position in a request message **650.** Again, the UID may be an OS based UID that is part of message **650** in some cases.

The Signal Service **612** receives message **650** and may perform a local check to determine whether any cached permissions are saved, shown at block **652.** Alternatively, or in addition to the check at block **652,** the Signal Service **612** may send a check message **654** to the Permission Service **614.** In this case, the check message includes the UID of application **610,** optionally the UID of signal service **612,** along with the permission being checked. In this case, the permission is "vehicle ACCESS_CABIN_SIGNALS".

Permission Service **614** may check that the UID has been granted access to the permission (e.g., UID 1000 is granted permission "vehicle.ACCESS_ CABIN_SIGNALS" configured by Table 3) and, if yes, may send a response message **656** back to the Signal Service **612.** In some cases, Signal Service **612** may cache the response (not shown). Further, based on the check at block **652** or the response at block **656,** Signal Service **612** may send a response message **660** back to application **610** indicating the driver position. Again, the Signal Service **612** is responsible for the security of the service by utilizing the Permission Service **614** before providing a response **660.**

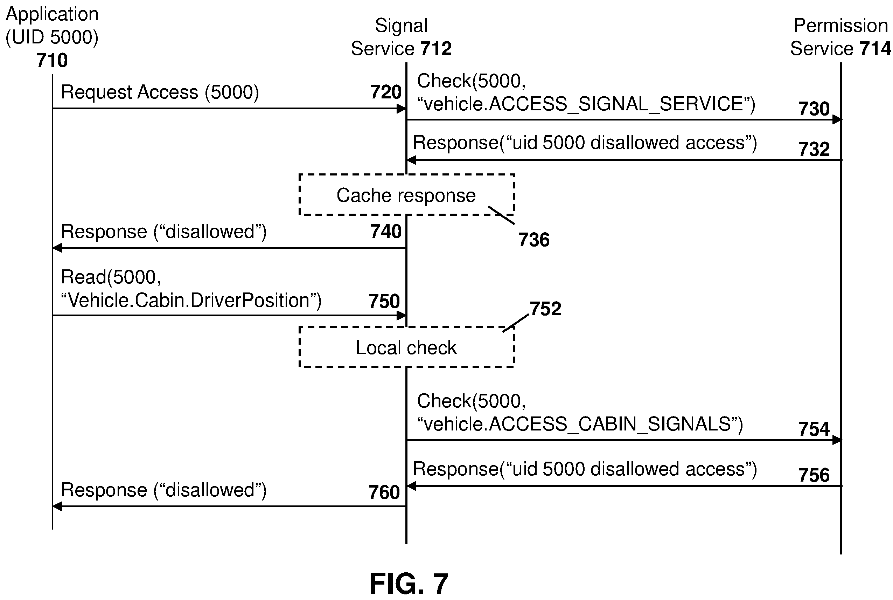

In other cases, the signal service may deny access to the resource if the UID requesting such access does not have the particular permission. Reference is now made to **Figure 7****.**

In the embodiment of **Figure 7****,** an application **710** seeks information from a signal service **712.** Further, a Permission Service **714** may be queried regarding the permissions. Again, Permission Service **714** may be the same as Permission Service **272** from the embodiment **Figure 2****,** Permission Service **320** from the embodiment of **Figure 3****,** and/or the Permission Service **430** from the embodiment of **Figure 4****.**

In this case, application **710** has a UID of 5000. Therefore, application **710** requests access utilizing this UID, as shown with message **720.** The UID may be an OS level UID part of message **720.**

Signal service **712,** on receiving message **720,** may send a check message **730** to Permission Service **714.** Check message **730** may include the UID of the requesting application **710,** the UID of signal service **712,** along with the permission being checked. In this case, the permission is "vehicle.ACCESS_SIGNAL_SERVICE".

The Permission Service **714** checks to determine whether the UID has the associated permission. In this case, if the configuration of Table 3 above was used (UID 5000 is not granted permission "vehicle.ACCESS_SIGNAL_SERVICE" in Table 3) or no dynamic permission was granted to the application with UID 5000, then Permission Service **714** discovers that the application **710** does not have the appropriate permissions. In this case, the Permission Service **714** may send a response message **732** indicating that the UID 5000 is disallowed access.

In some cases, signal services **712** may receive message **732** and cache the response, shown at block **736.** However, caching is optional.

Signal service **712** may then enforce the permissions by sending a message **740** back to application **710** indicating that the access is disallowed.

In the example of **Figure 7****,** application **710** may be persistent and may request the driver position in message **750.** In this case, the signal service **712** may perform a local check of its cache at block **752** to determine whether permissions have been granted. However, this local check is optional. In some cases, the signal service **712** may instead, or in addition, send a check message **754** to Permission Service **714.** Check message **754** may include the UID of the application **710,** the UID of signal service **712,** as well as permission being checked. In the example of **Figure 7****,** this permission is "vehicle.ACCESS_CABIN_SIGNALS".

Permission Service **714** may check whether a UID has been granted the permission found in the check message **754** and determine that no such permission has been granted. For example, permission "vehicle.ACCESS_CABIN_SIGNALS" was not statically granted (by Table 3) or dynamically granted to UID 5000. Therefore, Permission Service **714** may send a response message **756** indicating that UID 5000 is disallowed access.

In some cases, signal service **712** may receive message **756** and cache the response. Signal service **712** may further send a response message **760** back to application **710** indicating that access is disallowed.

Again, in this way, signal service **712** controls access to the resources of signal service **712** by sending queries to Permission Service **714.**

### Installation

Synthetic Sensors interested in an insight from another Synthetic Sensor may need to be granted permission to subscribe to updates to the insights from that Synthetic Sensor. This means that a Synthetic Sensor may need to be able to define its own permissions when deployed on a system in a vehicle. It also means that this Synthetic Sensor may need to have permission to access the vehicle signals that it requires to synthesize its insights. Such access to these signals is controlled by the Signal Service as per the embodiment of **Figure 7****,** for example.

Upon deployment of a Synthetic Sensor into a system running on a vehicle, the Synthetic Sensor is granted the permission to define its own permissions. This can be done by the Installer Service defining such a permission using the name of the Synthetic Sensor (which in some embodiments must be unique) as the prefix for the permission, within the Synthetic Sensor permission domain.

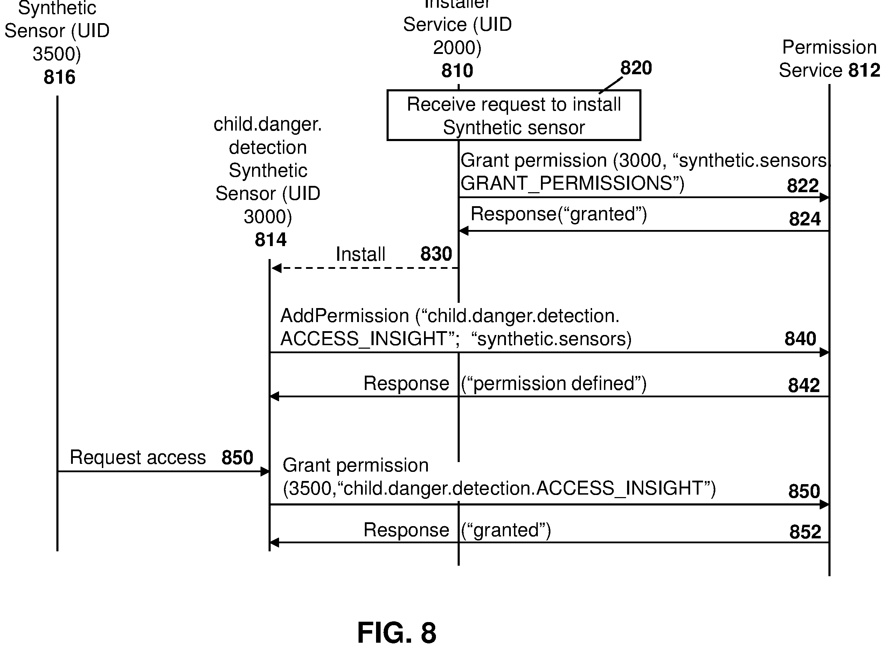

One example is shown with regard to **Figure 8****.** In the example of **Figure 8****,** a "child.danger.detection" Synthetic Sensor is installed on a system. This Synthetic Sensor is assigned UID 3000 at installation time.

More specifically, an Installer Service **810** may communicate with a Permission Service **812.** Again, Permission Service **812** may be the same as Permission Service **272** from the embodiment **Figure 2****,** Permission Service **320** from the embodiment of **Figure 3****,** and/or the Permission Service **430** from the embodiment of **Figure 4****.** The Installer Service **810** may receive a request to install a new Synthetic Sensor **814** called "child.danger.detection", as shown at block **820.** Installer Service **810** may assign UID 3000 to this Synthetic Sensor.

Installer Service **810** may then send a message **822** to the Permission Service **812.** Message **822** may be a grant, specifying the UID and the domain and permissions that are sought to be granted. Specifically, in the example of **Figure 8****,** message **822** is a request to grant "synthetic. sensors.GRANT_PERMISSIONS" to UID 3000.

Permission Service **812** receives message **822,** and determines whether the installer is allowed to grant permissions in the synthetic.sensors domain. In this case, Permission Service **812** finds that the Installer Service **810** does have the ability to grant permissions to the synthetic.sensors domain, and therefore sends a response **824** back to the Installer Service **810.** The response **824** indicates that the permission to install the synthetic sensor has been granted.

Based on the receipt of response **824,** the Installer Service **810** may install synthetic sensor **814,** as shown with dotted arrow **830.**

The newly installed child.danger.detection synthetic sensor **814** can now create any permission it wants under the synthetic sensors domain, as long as such permission is unique. To make sure there is no collision with other permissions, it can define these permissions with its own name as the prefix in some cases.

For example, in the embodiment of **Figure 8****,** synthetic sensor **814** may send a request to Permission Service **812** asking to add a permission, indicating the permission and domain. This is shown in the example of the **Figure 8** with message **840,** which specifies AddPermission("child.danger.detection.ACCESS_INSIGHT"; synthetic.sensors). In this example, the permission is provided with the proxy "child.danger.detection" and the domain is specified as "synthetic.sensors". In some cases, message **840** may include the UID 3000 that made the request.

In response to receiving message **840,** the Permission Service **812** performs a local check to ask whether the child.danger.detection Synthetic Sensor has been granted the synthetic.sensors.GRANT_PERMISSIONS permission. In the example of **Figure 8****,** the permission has been granted and therefore a response message **842** is provided back to synthetic sensor **814** indicating that the permission has been defined.

Subsequently, another synthetic sensor with UID 3500, shown a synthetic sensor **816,** may request access to synthetic sensor insights generated by the synthetic sensor **814,** as shown with message **850.** Synthetic sensor **816** may have just been created, for example utilizing the same process as above regarding messages **822** and **824,** and is now trying to obtain the data that it needs. In other cases, synthetic sensor **816** may be updated and now needs new information. Other options are possible.

On receiving message **850,** synthetic sensor **814** may send a request message **850** to Permission Service **812.** As will be appreciated by those in the art, request message **850** may be an API call, a message to a particular address or port, among other options. Message **850** may include an indication that synthetic sensor **814** is granting the child.danger.detection.ACCESS_INSIGHT permission to UID 3500. Message **850** may include the UIDs of synthetic sensors **814** and **816** as well as the granted permission.

On receiving message **850,** Permission Service **812** performs a check to determine whether the child.danger.detection Synthetic Sensor has the ability to grant permissions to the synthetic.sensors domain. In the example of **Figure 8****,** this determination finds that the child.danger.detection Synthetic Sensor **814** has this permission and therefore Permission Service **812** generates a response message **852** in which the synthetic sensor **814** is told that the request has been granted. This grant may be communicated back to the synthetic sensor **816** (not shown).

Therefore, the example of **Figure 8** shows the installation of a synthetic sensor, the provisioning of permissions dynamically by the synthetic sensor, and the granting of permissions to other synthetic sensors dynamically. Subsequently, Synthetic Sensor 816 may request insights from Synthetic Sensor 814, for example using a process such as that described with regard to **Figure 6****.**

### GID-Based Permissions

Although various embodiments of the present disclosure support the definition and management of permissions without needing to rely on an operating system's group ID (GID) management, there remain situations where using GIDs may be desirable, such as to control access to file system components (files, sockets, devices. etc.).

In these situations, it may be beneficial to have a single point of contact for permission management, the Permission Service, as for example described in **Figures 2** to **4****.** For this reason, in some cases the Permission Service may not only support permissions as defined above, but also GID-based permissions. This allows for the abstraction of OS permissions for accessing the system's resources.

This is useful in environments where the OS is installed in a read-only partition in the File System and it is not possible to create new GIDs using the OS functionality (for example, when the /*etc*/*group* file in Linux cannot be updated because it resides in a read-only partition).

As discussed regarding **Figures 5** to **8** above, the Permission Service does not perform enforcement, but merely provides information as to whom has been granted a permission. The services making use of the Permission Service do the enforcement themselves. In some cases, the underlying OS can be used to do the enforcement. In this case, a GID can be associated with the permission, without creating the GID using the OS functionality, by simply using a GID.

The GID associated with a permission can be a GID that has already been defined using the OS GID support functionality or a GID that has not been defined.

GID-based permissions are defined through Permission Service configuration as they are statically defined and granted.

**TABLE 4: Example of defining GID Permissions and Grants**

| |
|---|
| ```
 { "name": "example",
``` |
| ```
   "description": "Domain for some components",
    "reserved-permission-prefixes": [
       "example"
   ],
   "permissions" : [
     {"name": "example.COMMUNICATE_OVER_SOCKET", "gid": 1234},
   ],
   "permission-grants" : [
     {"name": "example.COMMUNICATE_OVER_SOCKET", "uid-alias":
       "Example-App"},
``` |

In Table 4 above, under "permissions", an undefined GID 1234 is associated with a permission ("example.COMMUNICATE_OVER_SOCKET") under the "example" domain. In this example, the GID value 1234 is not defined in the OS (for example, not present in the /*etc*/*group* file in Linux).

Through the "permission-grants" entry in Table 4, the "Example-App" application (assigned UID 6500) is granted access to all file system components that have been assigned GID 1234 via the permission "example.COMMUNICATE_OVER_SOCKET", based on the set of file system access permissions (read, write, execute, etc.) assigned to the component upon its creation.

Upon coming up, the Permission Service reads its configuration and creates a GID of 1234 that it associates with the "example. COMMUNICATE_OVER_SOCKET" permission.

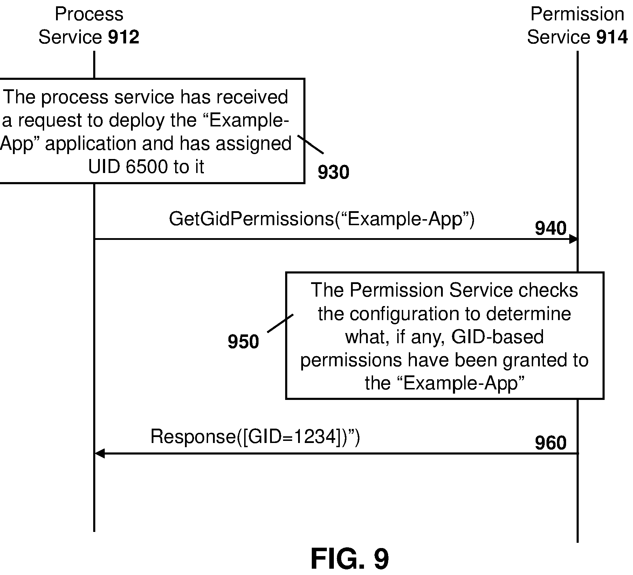

Specifically, reference is now made to **Figure 9****,** which shows a process for obtaining GIDs and group permissions. In particular, a process service **912** communicates with a Permission Service **914.**

After the Permission Service **914** has activated and read its configuration in Table 4, the Process Service **912** deploys the "Example-App" application and assigns it the 6500 UID, as shown at block **930.** The Process Service **912** then asks the Permission Service what GID-based permissions have been granted to the "Example-App", shown with message **940.**

The Permission Service **914** then checks the configuration to determine what, if any, GID-based permissions have been granted to the Example-App, as shown at block **950.** Permission service **914** then responds that the "example.COMMUNICATE_OVER_SOCKET" permission, with GID 1234, has been granted to the "Example-App" application, shown as message **960.**

The Process Service **914** may then add the GID 1234 to the 6500 UID using the OS interface that supports adding a supplementary group to a UID (not shown).

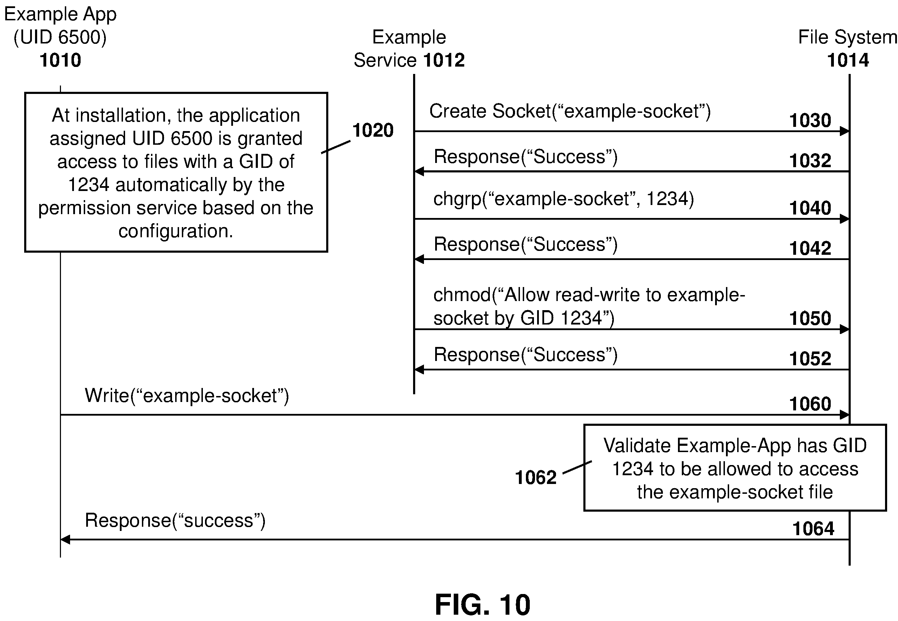

Once the permissions are assigned, the Example App may perform certain actions. For example, referring to Figure **10****,** the Example App may access a socket.

In particular, **Figure 10** shows Example App **1010,** Example Service **1012** and a File System **1014.**

At installation, the "Example-App" application assigned UID 6500 is granted access to files with a GID of 1234 automatically by the permission service based on the configuration, shown at block **1020.**

Upon coming up, the Example Service **1012** creates a socket called "example-socket" that can be used by applications to connect to the Example Service **1012.** This is shown with a create socket message **1030** and a success response message **1032** from file system **1014** in the embodiment of **Figure 10****.**

Example Service **1012** then assigns GID 1234 to this socket, as shown with the *chgrp()* message **1040 in** **Figure 10****.** File system **1014,** on allowing the assignment, sends success response message **1042** back to Example Service **1012.**

Example Service further sets the group access permissions for this socket, shown using *chmod()* message **1050 in** **Figure 10****.** File system **1014** may send a success response message **1052** back to Example Service **1012** on successfully setting the group access permissions for the socket.

Subsequently, the "Example-App" **1010** can access the socket created in the File System **1014** by the Example Service **1012,** as long as it respects the access permissions granted using *chmod().* For example, in the embodiment of **Figure 10****,** the Example App **1010** may try to write with the example socket, shown as message **1060.** The File System **1014** may validate that the Example App **1010** has GID 1234 to be allowed to access the example socket file, as shown at block **1062.** In some cases, the File System **1014** may be notified by the Permission Service that the Example App **1010** is associated with GID 1234.

Depending on the results of the check at block **1062,** the File System **1014** may send a success response message **1064** back to the Example App **1010.**

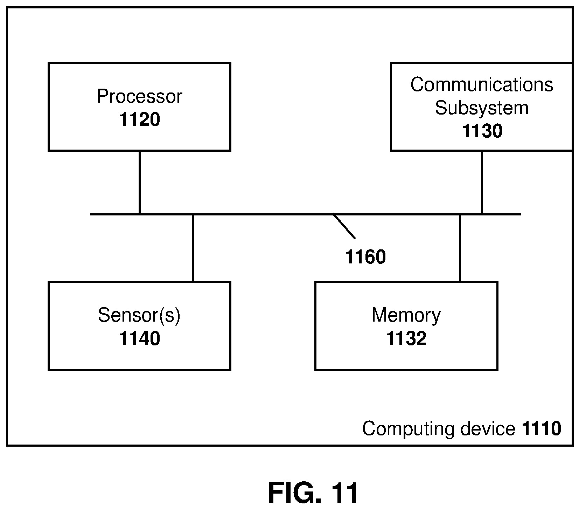

The above domains, network elements, cloud services, nodes, Permission Services, services and other computing platforms may be implemented using any computing device. One simplified diagram of a computing device is shown with regard to **Figure 11****.** The computing device of **Figure 11** could be any fixed or mobile computing device.

In **Figure 11****,** device **1110** includes a processor **1120** and a communications subsystem **1130,** where the processor **1120** and communications subsystem **1130** cooperate to perform the methods of the embodiments described above. Communications subsystem **1130** allows device **1110** to communicate with other devices or network elements and may vary based on the type of communication being performed. Further, communications subsystem **1130** may comprise a plurality of communications technologies, including any wired or wireless communications technology.

Processor **1120** is configured to execute programmable logic, which may be stored, along with data, on device **1110,** and shown in the example of **Figure 11** as memory **1132.** Memory **1132** can be any tangible, non-transitory computer readable storage medium which stores instruction code that, when executed by processor **1120** cause device **1110** to perform the methods of the present disclosure. The computer readable storage medium may be a tangible or in transitory/non-transitory medium such as optical (e.g., CD, DVD, etc.), magnetic (e.g., tape), flash drive, hard drive, or other memory known in the art.

Alternatively, or in addition to memory **1132,** device **1110** may access data or programmable logic from an external storage medium, for example through communications subsystem **1130.**

In the example of **Figure 11****,** one or more sensors **1140** may be associated with the computing device. However, this is optional and in some cases computing device **1110** will not be associated with sensors.

Communications between the various elements of device **1110** may be through an internal bus **1160** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation descried above should not be understood as requiring such separation in all implementations, and it should be understood that the described program components and systems can generally be integrated together in a single software product or packaged into multiple software products.

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps are not implied by the order they appear in the claims.

When messages are sent to/from an electronic device, such operations may not be immediate or from the server directly. They may be synchronously or asynchronously delivered, from a server or other computing system infrastructure supporting the devices/methods/systems described herein. The foregoing steps may include, in whole or in part, synchronous/asynchronous communications to/from the device/infrastructure. Moreover, communication from the electronic device may be to one or more endpoints on a network. These endpoints may be serviced by a server, a distributed computing system, a stream processor, etc. Content Delivery Networks (CDNs) may also provide may provide communication to an electronic device. For example, rather than a typical server response, the server may also provision or indicate a data for content delivery network (CDN) to await download by the electronic device at a later time, such as a subsequent activity of electronic device. Thus, data may be sent directly from the server, or other infrastructure, such as a distributed infrastructure, or a CDN, as part of or separate from the system.

Typically, storage mediums can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly a plurality of nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A method for managing permissions, performed by a permission service (514) on a computing device, the method comprising:
receiving (530, 540) a request at the permission service (514) from a first application (512), the request comprising: an identifier for the first application (512), an identifier associated with an operating system for a second application (510) and a permission for the second application (510) to access resources;
determining that the first application (512) has permission to grant permissions to the second application based on the identifier of the first application (510);
in response to the determining, performing an action at the permission service (514) based on the received request; and
returning results (550) of the action to the first application (510) indicating whether the second application has the permission to access the resources
wherein the action is to grant the permission to the second application (510).

2. The method of claim 1, wherein the identifier is a user identifier for the operating system.

3. The method of claim 1, wherein the permission includes a permission name that is comprised of a domain, an action and a subject.

4. The method of claim 3, wherein the domain includes prefixes unique within a computing system.

5. The method of claim 3, wherein the permission name is unique within the domain.

6. The method of claim 1, wherein the first application is a service that enforces the permission using the request to the permission service (514).

7. The method of claim 1, wherein the permission service (514) is initially configured statically at run time with associations between identifiers and permissions, and is further configured to allow dynamic creation of permissions after run time.

8. A computing device configured as a permission service (514) for managing permissions, the computing device comprising:
a processor; and
a communications subsystem,
wherein the computing device is configured to perform the steps of the method according to any of claims 1 to 7.

9. A computer readable medium for storing instruction code, which, when executed by a processor of a computing device configured as a permission service (514) for managing permissions cause the computing device to perform the steps of the method of any of claims 1 to 7.

## Patentansprüche

1. Verfahren zum Verwalten von Genehmigungen, das von einem Genehmigungsdienst (514) auf einer Datenverarbeitungsvorrichtung durchgeführt wird, wobei das Verfahren Folgendes umfasst:
Empfangen (530, 540) einer Anforderung am Genehmigungsdienst (514) von einer ersten Anwendung (512), wobei die Anforderung Folgendes umfasst: eine Kennung für die erste Anwendung (512), eine Kennung, die mit einem Betriebssystem für eine zweite Anwendung (510) verknüpft ist, und eine Genehmigung für die zweite Anwendung (510) zum Zugreifen auf Ressourcen;
Bestimmen, dass es der ersten Anwendung (512) genehmigt ist, der zweiten Anwendung auf Basis der Kennung der ersten Anwendung (510) Genehmigungen zu gewähren;
in Reaktion auf das Bestimmen Durchführen einer Aktion am Genehmigungsdienst (514) auf Basis der empfangenen Anforderung; und
Zurückgeben von Ergebnissen (550) der Aktion an die erste Anwendung (510), die anzeigen, ob es der zweiten Anwendung genehmigt ist, auf die Ressourcen zuzugreifen,
wobei die Aktion der zweiten Anwendung (510) die Genehmigung gewähren soll.

2. Verfahren nach Anspruch 1, wobei die Kennung eine Benutzerkennung für das Betriebssystem ist.

3. Verfahren nach Anspruch 1, wobei die Genehmigung einen Genehmigungsnamen beinhaltet, der eine Domäne, eine Aktion und einen Betreff umfasst.

4. Verfahren nach Anspruch 3, wobei die Domäne Präfixe beinhaltet, die in einem Datenverarbeitungssystem eindeutig sind.

5. Verfahren nach Anspruch 3, wobei der Genehmigungsname in der Domäne eindeutig ist.

6. Verfahren nach Anspruch 1, wobei die erste Anwendung ein Dienst ist, der die Genehmigung unter Verwendung der Anforderung beim Genehmigungsdienst (514) durchsetzt.

7. Verfahren nach Anspruch 1, wobei der Genehmigungsdienst (514) anfänglich bei Laufzeit mit Verknüpfungen zwischen Kennungen und Genehmigungen statisch ausgelegt ist und ferner dazu ausgelegt ist, eine dynamische Erstellung von Genehmigungen nach Laufzeit zu erlauben.

8. Datenverarbeitungsvorrichtung, die als ein Genehmigungsdienst (514) zum Verwalten von Genehmigungen ausgelegt ist, wobei die Datenverarbeitungsvorrichtung Folgendes umfasst:
einen Prozessor; und
ein Kommunikationsuntersystem,
wobei die Datenverarbeitungsvorrichtung dazu ausgelegt ist, die Schritte des Verfahrens gemäß einem der Ansprüche 1 bis 7 durchzuführen.

9. Computerlesbares Medium zum Speichern von Anweisungscode, der, wenn er von einem Prozessor einer Datenverarbeitungsvorrichtung ausgeführt wird, die als ein Genehmigungsdienst (514) zum Verwalten von Genehmigungen ausgelegt ist, die Datenverarbeitungsvorrichtung veranlasst, die Schritte des Verfahrens nach einem der Ansprüche 1 bis 7 durchzuführen.

## Revendications

1. Procédé de gestion des permissions réalisé par un service de permission (514) sur un dispositif informatique, le procédé comprenant les étapes suivantes :
recevoir (530, 540) une demande au niveau du service de permission (514) d'une première application (512), la demande comprenant : un identifiant pour la première application (512), un identifiant associé à un système d'exploitation pour une deuxième application (510) et une permission pour la deuxième application (510) d'accéder à des ressources ;
déterminer que la première application (512) a la permission d'accorder des permissions à la deuxième application sur la base de l'identifiant de la première application (510) ;
en réponse à la détermination, effectuer une action au niveau du service de permission (514) sur la base de la demande reçue ; et
renvoyer des résultats (550) de l'action à la première application (510) indiquant si la deuxième application a la permission d'accéder aux ressources,
dans lequel l'action consiste à accorder la permission à la deuxième application (510).

2. Procédé selon la revendication 1, dans lequel l'identifiant est un identifiant d'utilisateur pour le système d'exploitation.

3. Procédé selon la revendication 1, dans lequel la permission comporte un nom de permission qui est composé d'un domaine, d'une action et d'un sujet.

4. Procédé selon la revendication 3, dans lequel le domaine comporte des préfixes uniques au sein d'un système informatique.

5. Procédé selon la revendication 3, dans lequel le nom de permission est unique au sein du domaine.

6. Procédé selon la revendication 1, dans lequel la première application est un service qui applique la permission en utilisant la demande au service de permission (514).

7. Procédé selon la revendication 1, dans lequel le service de permission (514) est initialement configuré de manière statique à un temps d'exécution avec des associations entre les identifiants et les permissions, et est en outre configuré pour permettre la création dynamique de permissions après le temps d'exécution.

8. Dispositif informatique configuré en tant que service de permission (514) de gestion des permissions, le dispositif informatique comprenant :
un processeur ; et
un sous-système de communication,
dans lequel le dispositif informatique est configuré pour effectuer les étapes du procédé selon l'une des revendications 1 à 7.

9. Support lisible par ordinateur pour stocker un code d'instruction qui, lorsqu'il est exécuté par un processeur d'un dispositif informatique configuré en tant que service de permission (514) de gestion des permissions, amène le dispositif informatique à effectuer les étapes du procédé selon l'une des revendications 1 à 7.
